(19)

Europäisches
Patentamt
European
Patent Office
Office européen
des brevets

(11) **EP 3 933 475 A1**

(12) **EUROPEAN PATENT APPLICATION**
published in accordance with Art. 153(4) EPC

(43) Date of publication:
**05.01.2022 Bulletin 2022/01**

(21) Application number: **20924979.6**

(22) Date of filing: **30.04.2020**

(51) Int Cl.:
*G02B 13/00* (2006.01)     *G02B 13/18* (2006.01)

(86) International application number:
**PCT/CN2020/088513**

(87) International publication number:
**WO 2021/217663 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NANCHANG O-FILM PRECISION
OPTICAL
PRODUCT CO. LTD.
Nanchang city, jiangxi province 330096 (CN)**

(72) Inventor: **The designation of the inventor has not
yet been filed**

(74) Representative: **Ramrath, Lukas
Patentanwälte Bressel und Partner mbB
Potsdamer Platz 10
10785 Berlin (DE)**

(54) **OPTICAL SYSTEM, LENS MODULE, AND ELECTRONIC DEVICE**

(57)     An optical system, a lens module, and an electronic device are provided. The optical system includes a first lens with a positive refractive power, where the first lens has an object-side surface which is convex near the optical axis and an image-side surface which is concave near the optical axis; a second lens with a negative refractive power, where the second lens has an object-side surface which is convex near the optical axis and an image-side surface which is concave near the optical axis; a third lens with a refractive power; a fourth lens with a positive refractive power; a fifth lens with a refractive power; a sixth lens with a refractive power, where the sixth lens has an object-side surface which is concave near the optical axis; and a seventh lens with a negative refractive power, where the seventh lens has an object-side surface which is convex near the optical axis and an image-side surface which is concave near the optical axis. Each of the first lens to the seventh lens has an aspherical object-side surface and an aspherical image-side surface. The optical system satisfies the following expression: $TTL/Imgh<1.32$, where $TTL$ represents a distance from the object-side surface of the first lens to an imaging surface of the optical system along the optical axis, and $Imgh$ represents half of a length of a diagonal of an effective pixel area of the imaging surface. According to the present disclosure, the requirements of high resolution, large aperture, and good imaging quality can be satisfied, and the structure can be miniaturized.

FIG. 1a

**Description**

TECHNICAL FIELD

The present disclosure relates to the technical field of optical imaging, and in particular to an optical system, a lens module, and an electronic device.

BACKGROUND

In recent years, with the development of manufacturing technologies for electronic devices such as smart phones and tablets and the emergence of diversified user requirements, the demand for miniaturized camera lenses in the market is gradually increasing. At present, an electronic device is usually equipped with multiple cameras with different characteristics and suitable for different application environments. As the size and thickness of electronic devices are maintained or even reduced, more stringent requirements on the miniaturization of the lenses of the electronic devices have emerged. In addition, with the advancement of semiconductor process technology, the pixel size of photosensitive elements has also been reduced, and miniaturized lenses with good imaging quality have become the mainstream of the market.

In order to provide users with a better imaging experience, imaging devices are usually equipped with large photosensitive elements. In addition, in order to achieve high imaging quality and large aperture, more lenses need to be installed in the imaging device, which makes it difficult to realize the miniaturization of the camera lens of the imaging device. Therefore, the existing lens cannot satisfy the requirements of large aperture, high resolution, and miniaturization at the same time.

SUMMARY

The present disclosure aims to provide an optical system, a lens module, and an electronic device to solve the above technical problems.

An optical system is provided in the present disclosure. The optical system includes, in order from an object side to an image side along an optical axis: a first lens with a positive refractive power, where the first lens has an object-side surface which is convex near the optical axis and an image-side surface which is concave near the optical axis; a second lens with a negative refractive power, where the second lens has an object-side surface which is convex near the optical axis and an image-side surface which is concave near the optical axis; a third lens with a refractive power; a fourth lens with a positive refractive power; a fifth lens with a refractive power; a sixth lens with a refractive power, where the sixth lens has an object-side surface which is concave near the optical axis; and a seventh lens with a negative refractive power, where the seventh lens has an object-side surface which is convex near the optical axis and an image-side surface which is concave near the optical axis. Each of the first lens to the seventh lens has an aspherical object-side surface and an aspherical image-side surface. The optical system satisfies the following expression: $TTL/Imgh<1.32$, where $TTL$ represents a distance from the object-side surface of the first lens to an imaging surface of the optical system along the optical axis, and $Imgh$ represents half of a length of a diagonal of an effective pixel area of the imaging surface. According to the present disclosure, the first lens to the seventh lens are configured with appropriate surface profiles and refractive powers, so that the optical system can satisfy the requirements of high resolution, large aperture, and good imaging quality as well as maintain a compact structure and miniaturized. When the optical system satisfies the above expression and the imaging surface is fixed, the total length of the optical system can be small, and the miniaturization requirement for the optical system can be realized.

In some implementations, the optical system satisfies the following expression: $2<f/R14<3.5$, where $f$ represents an effective focal length of the optical system, and $R14$ represents a radius of curvature of the image-side surface of the seventh lens at the optical axis. When the optical system satisfies the above expression, $R14$ is assigned with an appropriate value, and the chief ray angle of the internal field of view of the chip can be better matched.

In some implementations, the optical system satisfies the following expression: $FNO≤2$, where $FNO$ represents an F-number of the optical system. When the optical system satisfies the above expression and the effective focal length of the optical system is fixed, a large aperture can be ensured with $FNO≤2$, so that the amount of light entering the optical system can be large enough Therefore, an image captured can be clearer, and the imaging quality of scenes with low brightness, such as night scenes, starry sky can be improved.

In some implementations, the optical system satisfies the following expression: $TTL/f<1.35$, where $TTL$ represents the distance from the object-side surface of the first lens to the imaging surface of the optical system along the optical axis, and $f$ represents an effective focal length of the optical system. When the optical system satisfies the above expression and the effective focal length of the optical system is fixed, the miniaturization requirement for the optical system can be satisfied.

In some implementations, the optical system satisfies the following expression: $f1/f2 > -0.15$, where $f1$ represents an effective focal length of the first lens, and $f2$ represents an effective focal length of the second lens. When the optical system satisfies the above expression, among the effective focal length of the first lens and the effective focal length of the second lens, one is positive and the other is negative, which effectively helps to balance the chromatic aberration of the optical system. The above focal length ratio can be assigned with an appropriate value, thereby reducing the sensitivity of the optical system to a certain extent.

In some implementations, the optical system satisfies the following expression: $sag1/sag2 < 15$, where $sag1$ represents a saggital depth at an effective aperture of the object-side surface of the first lens, and $sag2$ represents a saggital depth at an effective aperture of the image-side surface of the first lens. When the optical system satisfies the above expression, the ratio of $sag1/sag2$ can be assigned with an appropriate value, thereby ensuring the manufacturability of the first lens, which is beneficial to manufacturing. In addition, the sensitivity of the entire optical system can be reduced.

In some implementations, the optical system satisfies the following expression: $(R2+R1)/(R2-R1) < 5$, where $R1$ represents a radius of curvature of the object-side surface of the first lens, and $R2$ represents a radius of curvature of the image-side surface of the first lens. When the optical system satisfies the above expression, the ratio of $(R2+R1)/(R2-R1)$ can be assigned with an appropriate value, thereby enhancing the refractive power of the first lens. The chromatic spherical aberration can be well corrected even with a large aperture, and the overall performance can be improved.

In some implementations, the optical system satisfies the following expression: $f1234/f567 > -0.5$, where $f1234$ represents a combined focal length of the first lens to the fourth lens, and $f567$ represents a combined focal length of the fifth lens to the seventh lens. The optical system of the present disclosure can be regarded as composed of two groups of lenses. The first group of lenses includes the first lens to the fourth lens and has a positive focal length, and the second group of lenses includes the fifth lens to the seventh lens and has a negative focal length, which helps to correct the chromatic aberration of the entire optical system and improve the performance of the optical system. When the optical system satisfies the above expression, the absolute value of the focal length of the first group of lenses is smaller than the absolute value of the focal length of the second group of lenses, thereby reducing the sensitivity of the second group of lenses and improving the yield rate in the actual production process.

A lens module is provided. The lens includes a lens barrel, an electronic photosensitive element, and the above optical system. The first lens to the seventh lens of the optical system are disposed in the lens barrel, and the electronic photosensitive element is disposed on the image side of the optical system and configured to convert light passing through the first lens to the seventh lens and incident on the electronic photosensitive element into an electrical signal of an image. According to the present disclosure, the first lens to the seventh lens of the optical system are installed in the lens module and are configured with appropriate surface profiles and refractive powers. In this way, the lens module can satisfy the requirements of high resolution, large aperture, and good imaging quality as well as maintain a compact structure, and the miniaturization of the lens module can be achieved.

An electronic device is provided. The electronic device includes a housing and the above lens module received in the housing. According to the present disclosure, the above lens module is disposed in the electronic device, so that the electronic device can satisfy the requirements of high resolution, large aperture, and good imaging quality as well as maintain a compact structure, and the miniaturization of the electronic device can be achieved.

BRIEF DESCRIPTION OF THE DRAWINGS

In order to more clearly describe the technical solutions in the implementations of the present disclosure or the related art, the following will briefly introduce the drawings that need to be used in the description of the implementations or the related art. Obviously, the drawings in the following description illustrate only some implementations of the present disclosure. For those of ordinary skill in the art, other drawings can be obtained based on these drawings without creative work.

FIG. 1a is a schematic structural view of an optical system according to a first implementation.
FIG. 1b illustrates the longitudinal spherical aberration curve, the astigmatic field curve, and the distortion curve of the optical system according to the first implementation.
FIG. 2a is a schematic structural view of an optical system according to a second implementation.
FIG. 2b illustrates the longitudinal spherical aberration curve, the astigmatic field curve, and the distortion curve of the optical system according to the second implementation.
FIG. 3a is a schematic structural view of an optical system according to a third implementation.
FIG. 3b illustrates the longitudinal spherical aberration curve, the astigmatic field curve, and the distortion curve of the optical system according to the third implementation.
FIG. 4a is a schematic structural view of an optical system according to a fourth implementation.

FIG. 4b illustrates the longitudinal spherical aberration curve, the astigmatic field curve, and the distortion curve of the optical system according to the fourth implementation.

FIG. 5a is a schematic structural view of an optical system according to a fifth implementation.

FIG. 5b illustrates the longitudinal spherical aberration curve, the astigmatic field curve, and the distortion curve of the optical system according to the fifth implementation.

FIG. 6a is a schematic structural view of an optical system according to a sixth implementation.

FIG. 6b illustrates the longitudinal spherical aberration curve, the astigmatic field curve, and the distortion curve of the optical system according to the sixth implementation.

FIG. 7a is a schematic structural view of an optical system according to a seventh implementation.

FIG. 7b illustrates the longitudinal spherical aberration curve, the astigmatic field curve, and the distortion curve of the optical system according to the seventh implementation.

## DETAILED DESCRIPTION

Technical solutions in the implementations of the present disclosure will be described clearly and completely hereinafter with reference to the accompanying drawings in the implementations of the present disclosure. Apparently, the described implementations are merely some rather than all implementations of the present disclosure. All other implementations obtained by those of ordinary skill in the art based on the implementations of the present disclosure without creative efforts shall fall within the protection scope of the present disclosure.

A lens module is provided. The lens includes a lens barrel, an electronic photosensitive element, and an optical system according to some implementations of the present disclosure. The first lens to the seventh lens of the optical system are disposed in the lens barrel, and the electronic photosensitive element is disposed on the image side of the optical system and configured to convert light passing through the first lens to the seventh lens and incident on the electronic photosensitive element into an electrical signal of an image. The electronic photosensitive element may be a complementary metal oxide semiconductor (CMOS) or a charge-coupled device (CCD). The lens module can be an independent lens of a digital camera, or an imaging module integrated on an electronic device such as a smart phone. According to the present disclosure, the first lens to the seventh lens of the optical system are installed in the lens module and are configured with appropriate surface profiles and refractive powers. In this way, the lens module can satisfy the requirements of high resolution, large aperture, and good imaging quality as well as maintain a compact structure, and the miniaturization of the lens module can be achieved.

An electronic device is provided. The electronic device includes a housing and a lens module according to some implementations of the present disclosure received in the housing. The electronic device can be a smart phone, a personal digital assistant (PDA), a tablet computer, a smart watch, a drone, an e-book reader, a driving recorder, a wearable device, or the like. According to the present disclosure, the above lens module is provided in the electronic device, so that the electronic device can satisfy the requirements of high resolution, large aperture, and good imaging quality as well as maintain a compact structure, and the miniaturization of the electronic device can be achieved.

An optical system is provided. The optical system includes, in order from an object side to an image side along an optical axis: a first lens, a second lens, a third lens, a fourth lens, a fifth lens, and a seventh lens. In the first to sixth lenses, there is an air gap between any two adjacent lenses.

The first lens has a positive refractive power and an object-side surface which is convex near the optical axis and an image-side surface which is concave near the optical axis. The second lens has a negative refractive power and an object-side surface which is convex near the optical axis and an image-side surface which is concave near the optical axis. The third lens has a refractive power. The fourth lens has a positive refractive power. The fifth lens has a refractive power. The sixth lens has a refractive power and an object-side surface which is concave near the optical axis. The seventh lens has a negative refractive power and an object-side surface which is convex near the optical axis and an image-side surface which is concave near the optical axis. Each of the first lens to the seventh lens has an aspherical object-side surface and an aspherical image-side surface. The optical system satisfies the following expression: $TTL/Imgh < 1.32$, where $TTL$ represents a distance from the object-side surface of the first lens to an imaging surface of the optical system along the optical axis, and $Imgh$ represents half of a length of a diagonal of an effective pixel area of the imaging surface. According to the present disclosure, the first lens to the seventh lens are configured with appropriate surface profiles and refractive powers, so that the optical system can satisfy the requirements of high resolution, large aperture, and good imaging quality as well as maintain a compact structure and miniaturized. When the optical system satisfies the above expression and the imaging surface is fixed, the total length of the optical system can be small, and the miniaturization requirement for the optical system can be realized.

In some implementations, the optical system satisfies the following expression: $2 < f/R14 < 3.5$, where $f$ represents an effective focal length of the optical system, and $R14$ represents a radius of curvature of the image-side surface of the seventh lens at the optical axis. When the optical system satisfies the above expression, $R14$ is assigned with an appropriate value, and the chief ray angle of the internal field of view of the chip can be better matched.

In some implementations, the optical system satisfies the following expression: $FNO \leq 2$, where $FNO$ represents an F-number of the optical system. When the optical system satisfies the above expression and the effective focal length of the optical system is fixed, a large aperture can be ensured with $FNO \leq 2$, so that the amount of light entering the optical system can be large enough. Therefore, an image captured can be clearer, and the imaging quality of scenes with low brightness, such as night scenes, starry sky can be improved.

In some implementations, the optical system satisfies the following expression: $TTL/f < 1.35$, where $TTL$ represents the distance from the object-side surface of the first lens to the imaging surface of the optical system along the optical axis, and $f$ represents an effective focal length of the optical system. When the optical system satisfies the above expression and the effective focal length of the optical system is fixed, the miniaturization requirement for the optical system can be satisfied. An upper limit of $TTL$ can be set, for example, to 7mm

In some implementations, the optical system satisfies the following expression: $f1/f2 > -0.15$, where $f1$ represents an effective focal length of the first lens, and $f2$ represents an effective focal length of the second lens. When the optical system satisfies the above expression, among the effective focal length of the first lens and the effective focal length of the second lens, one is positive and the other is negative, which effectively helps to balance the chromatic aberration of the optical system. The above focal length ratio can be assigned with an appropriate value, thereby reducing the sensitivity of the optical system to a certain extent.

In some implementations, the optical system satisfies the following expression: $sag1/sag2 < 15$, where $sag1$ represents a saggital depth at an effective aperture of the object-side surface of the first lens, and $sag2$ represents a saggital depth at an effective aperture of the image-side surface of the first lens. When the optical system satisfies the above expression, the ratio of $sag1/sag2$ can be assigned with an appropriate value, thereby ensuring the manufacturability of the first lens, which is beneficial to manufacturing. In addition, the sensitivity of the entire optical system can be reduced.

In some implementations, the optical system satisfies the following expression: $(R2+R1)/(R2-R1) < 5$, where $R1$ represents a radius of curvature of the object-side surface of the first lens, and $R2$ represents a radius of curvature of the image-side surface of the first lens. When the optical system satisfies the above expression, the ratio of $(R2+R1)/(R2-R1)$ can be assigned with an appropriate value, thereby enhancing the refractive power of the first lens. The chromatic spherical aberration can be well corrected even with a large aperture, and the overall performance can be improved.

In some implementations, the optical system satisfies the following expression: $f1234/f567 > -0.5$, where $f1234$ represents a combined focal length of the first lens to the fourth lens, and $f567$ represents a combined focal length of the fifth lens to the seventh lens. The optical system of the present disclosure can be regarded as composed of two groups of lenses. The first group of lenses includes the first lens to the fourth lens and has a positive focal length, and the second group of lenses includes the fifth lens to the seventh lens and has a negative focal length, which helps to correct the chromatic aberration of the entire optical system and improve the performance of the optical system. When the optical system satisfies the above expression, the absolute value of the focal length of the first group of lenses is smaller than the absolute value of the focal length of the second group of lenses, thereby reducing the sensitivity of the second group of lenses and improving the yield rate in the actual production process.

First implementation

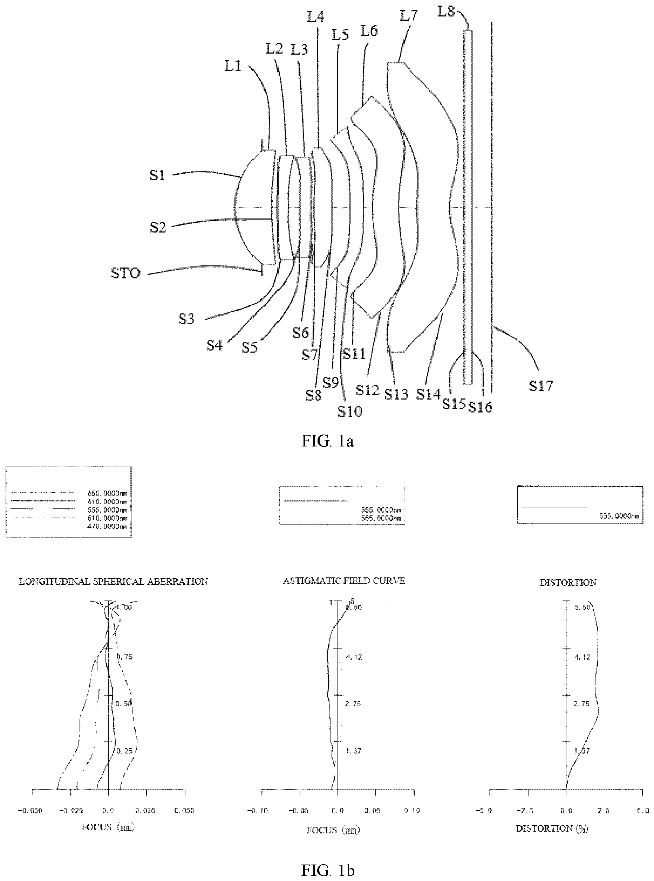

Referring to FIG. 1a and FIG. 1b, the optical system in this implementation includes, in order from an object side to an image side along an optical axis: a first lens L1, a second lens L2, a third lens L3, a fourth lens L4, a fifth lens L5, a sixth lens L6, and a seventh lens L7.

The first lens L1 has a positive refractive power. The object-side surface S1 of the first lens is convex near the optical axis, and the image-side surface S2 of the first lens is concave near the optical axis. The object-side surface S1 of the first lens is concave at the periphery, and the image-side surface S2 of the first lens is concave at the periphery. The second lens L2 has a negative refractive power. The object-side surface S3 of the second lens is convex near the optical axis, and the image-side surface S4 of the second lens is concave near the optical axis. The object-side surface S3 of the second lens is convex at the periphery, and the image-side surface S4 of the second lens is concave at the periphery. The third lens L3 has a negative refractive power. The object-side surface S1 of the third lens is convex near the optical axis, and the image-side surface S2 of the third lens is concave near the optical axis. The object-side surface S5 of the third lens is concave at the periphery, and the image-side surface S6 of the third lens is concave at the periphery. The fourth lens L4 has a positive refractive power. The object-side surface S7 of the fourth lens is convex near the optical axis, and the image-side surface S8 of the fourth lens is concave near the optical axis. The object-side surface S7 of the fourth lens is convex at the periphery, and the image-side surface S8 is a concave surface at the periphery. The fifth lens L5 has a negative refractive power. The object-side surface S9 of the fifth lens is concave near the optical axis, and the image-side surface S10 of the fifth lens is convex near the optical axis. The object-side surface S9 of the fifth lens is convex at the periphery, and the image-side surface S10 is convex at the periphery. The sixth lens L6 has a positive refractive power. The object-side surface S11 of the sixth lens is convex near the optical axis, and the image-side surface S12 of the sixth lens is concave near the optical axis. The object-side surface S11 of the sixth lens is convex at the periphery, and the image-side surface S12 is concave at the periphery. The seventh lens L7 has a negative refractive power. The object-side surface S13 of the seventh lens is convex near the optical axis, and the image-side surface S14 of the seventh lens is concave near the optical axis. The object-side surface S13 of the seventh lens is concave at the periphery, and the image-side surface S14 is convex at the periphery. The first lens L1 to the seventh lens L7 are all made of plastic.

In addition, the optical system also includes a stop (STO), an infrared filter L8, and an imaging surface S17. The stop is disposed on one side of the first lens L1 away from the second lens L2 for controlling the amount of light entering the optical system. In some implementations, the stop can also be disposed between two adjacent lenses or on other lenses. The infrared filter L8 is disposed on the image side of the seventh lens L7 and includes the object-side surface S15 and the image-side surface S16. The infrared filter L8 is used to filter out infrared light so that the light incident on the imaging surface S17 only contains visible light. The wavelength of the visible light is 380nm-780nm. The infrared filter L8 is made of glass and can be coated thereon. The imaging surface S17 is the surface on which an image formed after the light from an object passes through the optical system.

Table 1a shows characteristics of the optical system in this implementation. Data in Table 1a is obtained based on light of a wavelength of 587 nm. Y radius, thickness, and focal length are all in millimeters (mm).

Table 1a

| First implementation | | | | | | | | |
|---|---|---|---|---|---|---|---|---|
| *f*= 5.91mm, *FNO*= 1.75, *FOV*=84.99°, *TTL*= 7.00mm | | | | | | | | |
| Surface number | Surface name | Surface type | Y Radius | Thickness | Material | Refractive index | Abbe number | Effective focal length |
| OBJ | Object-side surface | Spherical | Infinity | Infinity | | | | |
| STO | Stop | Spherical | Infinity | -0.7397 | | | | |
| S1 | First lens | Aspherical | 2.2555 | 0.9948 | Plastic | 1.54 | 56.11 | 5.77 |
| S2 | | Aspherical | 6.7545 | 0.1653 | | | | |
| S3 | Second lens | Aspherical | 14.6558 | 0.2895 | Plastic | 1.67 | 19.24 | -22.49 |
| S4 | | Aspherical | 7.3774 | 0.3206 | | | | |
| S5 | Third lens | Aspherical | 36.3401 | 0.3002 | Plastic | 1.67 | 19.24 | -45.42 |
| S6 | | Aspherical | 16.5257 | 0.0763 | | | | |
| S7 | Fourth lens | Aspherical | 8.2472 | 0.4910 | Plastic | 1.52 | 56.74 | 19.96 |
| S8 | | Aspherical | 40.4931 | 0.4976 | | | | |
| S9 | Fifth lens | Aspherical | -24.3496 | 0.3632 | Plastic | 1.59 | 28.32 | -156.22 |
| S10 | | Aspherical | -33.3253 | 0.2661 | | | | |
| S11 | Sixth lens | Aspherical | 4.5595 | 0.7035 | Plastic | 1.59 | 28.32 | 35.86 |
| S12 | | Aspherical | 5.4867 | 0.4893 | | | | |
| S13 | Seventh lens | Aspherical | 4.6352 | 0.8960 | Plastic | 1.54 | 55.75 | -9.37 |
| S14 | | Aspherical | 2.2461 | 0.3910 | | | | |
| S15 | Infrared filter | Spherical | Infinity | 0.2100 | Glass | | | |
| S16 | | Spherical | Infinity | 0.5456 | | | | |
| S17 | Imaging surface | Spherical | Infinity | 0.0000 | | | | |
| Note: The reference wavelength=587nm. | | | | | | | | |

The effective focal length of the optical system is represented as *f*, the F-number of the optical system is represented as *FNO*, the angle of view of the optical system is represented as *FOV*, and the distance from the object-side surface of the first lens to the imaging surface of the optical system along the optical axis is represented as *TTL*.

In this implementation, the object-side surface and the image-side surface of any one of the first lens L1 to the seventh lens L5 are aspherical. The surface profile x of each aspherical lens can be defined by but not limited to the following aspherical formula:

$$x = \frac{ch^2}{1 + \sqrt{1 - (k+1)\ c^2 h^2}} + \sum Aih^i$$

where *x* represents a distance (saggital depth) along the optical axis from a vertex of the aspherical surface to a position on the aspherical surface at a height *h*, *c* represents the paraxial curvature of the aspherical surface, which is the inverse of the Y radius (that is, *c*=1/*R*, where *R* represents the Y radius in the Table 1a), *k* represents the conic coefficient, *Ai* represents the *i*-th order correction coefficient of the aspherical surface. Table 1b shows higher-order coefficients A4, A6, A8, A10, A12, A14, A16, A18, and A20 of each of aspherical lens surfaces S1 to S16 in the first implementation.

Table 1b

| Surface number | K | A4 | A6 | A8 | A10 |
|---|---|---|---|---|---|
| S1 | -0.4993 | 0.0041 | 0.0081 | -0.0154 | 0.0203 |
| S2 | -7.9341 | -0.0158 | 0.0058 | -0.0127 | 0.0240 |
| S3 | 1.5364 | -0.0355 | 0.0215 | -0.0192 | 0.0356 |
| S4 | 2.3871 | -0.0190 | 0.0136 | 0.0023 | 0.0023 |
| S5 | 0.0000 | -0.0171 | -0.0139 | 0.0275 | -0.0451 |
| S6 | 1.0666 | -0.0293 | -0.0126 | 0.0492 | -0.0853 |
| S7 | -2.4870 | -0.0410 | -0.0029 | 0.0230 | -0.0344 |
| S8 | 9.7150 | -0.0203 | -0.0033 | 0.0015 | -0.0069 |
| S9 | 2.0000 | -0.0076 | -0.0045 | -0.0112 | 0.0220 |
| S10 | -14.7771 | -0.0123 | -0.0249 | 0.0246 | -0.0140 |
| S11 | -2.9609 | -0.0032 | -0.0253 | 0.0193 | -0.0111 |
| S12 | -6.6950 | -0.0106 | 0.0072 | -0.0056 | 0.0017 |
| S13 | -2.5499 | -0.1046 | 0.0323 | -0.0075 | 0.0013 |
| S14 | -1.4469 | -0.0895 | 0.0276 | -0.0065 | 0.0010 |
| Surface number | A12 | A14 | A16 | A18 | A20 |
| S1 | -0.0162 | 0.0080 | -0.0024 | 0.0004 | 0.0000 |
| S2 | -0.0257 | 0.0164 | -0.0063 | 0.0013 | -0.0001 |
| S3 | -0.0394 | 0.0251 | -0.0094 | 0.0019 | -0.0002 |
| S4 | -0.0127 | 0.0153 | -0.0097 | 0.0032 | -0.0005 |
| S5 | 0.0393 | -0.0179 | 0.0023 | 0.0011 | -0.0003 |
| S6 | 0.0858 | -0.0530 | 0.0196 | -0.0039 | 0.0003 |
| S7 | 0.0281 | -0.0133 | 0.0032 | -0.0003 | 0.0000 |
| S8 | 0.0097 | -0.0070 | 0.0028 | -0.0006 | 0.0001 |
| S9 | -0.0211 | 0.0111 | -0.0033 | 0.0005 | 0.0000 |

(continued)

| Surface number | A12 | A14 | A16 | A18 | A20 |
|---|---|---|---|---|---|
| S10 | 0.0044 | -0.0007 | 0.0000 | 0.0000 | 0.0000 |
| S11 | 0.0040 | -0.0009 | 0.0001 | 0.0000 | 0.0000 |
| S12 | -0.0003 | 0.0000 | 0.0000 | 0.0000 | 0.0000 |
| S13 | -0.0002 | 0.0000 | 0.0000 | 0.0000 | 0.0000 |
| S14 | -0.0001 | 0.0000 | 0.0000 | 0.0000 | 0.0000 |

FIG. 1b illustrates the longitudinal spherical aberration curve, the astigmatic field curve, and the distortion curve of the optical system according to the first implementation. The longitudinal spherical aberration curve represents the focus deviation of light of different wavelengths after passing through the lenses of the optical system. The astigmatic field curve represents the tangential field curvature and sagittal field curvature. The distortion curve represents the magnitude of distortion corresponding to different angles of view. As illustrated in FIG. 1b, the optical system of the first implementation can have good imaging quality.

Second implementation

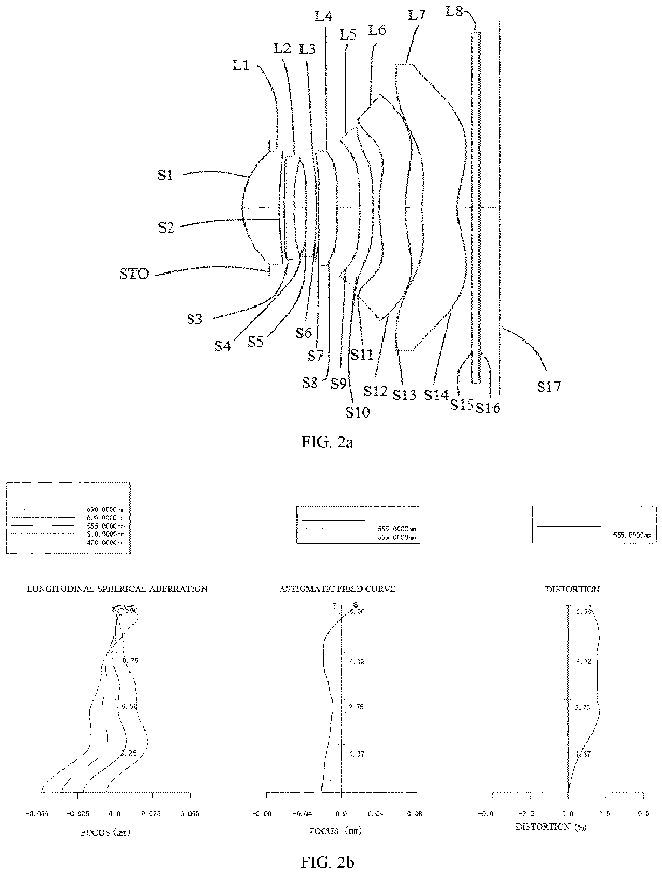

Referring to FIG. 2a and FIG. 2b, the optical system in this implementation includes, in order from an object side to an image side along an optical axis: a first lens L1, a second lens L2, a third lens L3, a fourth lens L4, a fifth lens L5, a sixth lens L6, and a seventh lens L7.

The first lens L1 has a positive refractive power. The object-side surface S1 of the first lens is convex near the optical axis, and the image-side surface S2 of the first lens is concave near the optical axis. The object-side surface S1 of the first lens is concave at the periphery, and the image-side surface S2 of the first lens is convex at the periphery. The second lens L2 has a negative refractive power. The object-side surface S3 of the second lens is convex near the optical axis, and the image-side surface S4 of the second lens is concave near the optical axis. The object-side surface S3 of the second lens is convex at the periphery, and the image-side surface S4 of the second lens is convex at the periphery. The third lens L3 has a positive refractive power. The object-side surface S1 of the third lens is concave near the optical axis, and the image-side surface S2 of the third lens is convex near the optical axis. The object-side surface S5 of the third lens is concave at the periphery, and the image-side surface S6 of the third lens is concave at the periphery. The fourth lens L4 has a positive refractive power. The object-side surface S7 of the fourth lens is convex near the optical axis, and the image-side surface S8 of the fourth lens is convex near the optical axis. The object-side surface S7 of the fourth lens is convex at the periphery, and the image-side surface S8 is a concave surface at the periphery. The fifth lens L5 has a negative refractive power. The object-side surface S9 of the fifth lens is concave near the optical axis, and the image-side surface S10 of the fifth lens is convex near the optical axis. The object-side surface S9 of the fifth lens is convex at the periphery, and the image-side surface S10 is concave at the periphery. The sixth lens L6 has a positive refractive power. The object-side surface S11 of the sixth lens is convex near the optical axis, and the image-side surface S12 of the sixth lens is concave near the optical axis. The object-side surface S11 of the sixth lens is convex at the periphery, and the image-side surface S12 is concave at the periphery. The seventh lens L7 has a negative refractive power. The object-side surface S13 of the seventh lens is convex near the optical axis, and the image-side surface S14 of the seventh lens is concave near the optical axis. The object-side surface S13 of the seventh lens is concave at the periphery, and the image-side surface S14 is convex at the periphery.

The other structures of the optical system of the second implementation are identical with the first implementation, reference can be made to the first implementation.

Table 2a shows characteristics of the optical system in this implementation. Data in Table 2a is obtained based on light of a wavelength of 587 nm. Y radius, thickness, and focal length are all in millimeters (mm).

Table 2a

| Second implementation | | | | | | | | |
|---|---|---|---|---|---|---|---|---|
| f= 5.90mm, FNO= 1.78, FOV=84.97°, TTL= 7.00mm | | | | | | | | |
| Surface number | Surface name | Surface type | Y Radius | Thickness | Material | Refractive index | Abbe number | Effective focal length |
| OBJ | Object-side surface | Spherical | Infinity | Infinity | | | | |
| STO | Stop | Spherical | Infinity | -0.7221 | | | | |
| S1 | First lens | Aspherical | 2.2446 | 0.9837 | Plastic | 1.54 | 56.11 | 5.55 |
| S2 | | Aspherical | 7.3970 | 0.1497 | | | | |
| S3 | Second lens | Aspherical | 16.3737 | 0.2560 | Plastic | 1.67 | 19.24 | -18.18 |
| S4 | | Aspherical | 6.9488 | 0.3240 | | | | |
| S5 | Third lens | Aspherical | -42.6470 | 0.2985 | Plastic | 1.67 | 19.24 | 918.36 |
| S6 | | Aspherical | -40.0000 | 0.0567 | | | | |
| S7 | Fourth lens | Aspherical | 12.6162 | 0.4846 | Plastic | 1.52 | 56.74 | 23.75 |
| S8 | | Aspherical | -427.5720 | 0.6377 | | | | |
| S9 | Fifth lens | Aspherical | -16.0282 | 0.3500 | Plastic | 1.59 | 28.32 | -64.82 |
| S10 | | Aspherical | -27.9003 | 0.1819 | | | | |
| S11 | Sixth lens | Aspherical | 4.8786 | 0.7095 | Plastic | 1.59 | 28.32 | 75.20 |
| S12 | | Aspherical | 5.1890 | 0.4504 | | | | |
| S13 | Seventh lens | Aspherical | 4.4476 | 0.9647 | Plastic | 1.54 | 55.75 | -10.48 |
| S14 | | Aspherical | 2.2931 | 0.3969 | | | | |
| S15 | Infrared filter | Spherical | Infinity | 0.2100 | Glass | | | |
| S16 | | Spherical | Infinity | 0.5456 | | | | |
| S17 | Imaging surface | Spherical | Infinity | 0.0000 | | | | |
| Note: The reference wavelength=587nm. | | | | | | | | |

Each parameter in Table 2a represents the same meaning as that in the first implementation.

Table 2b shows higher-order coefficients that can be used for each aspherical lens surface in the second implementation, where the surface profile of each aspherical lens surface can be defined by the formula given in the first implementation.

Table 2b

| Surface number | K | A4 | A6 | A8 | A10 |
|---|---|---|---|---|---|
| S1 | -0.4790 | 0.0031 | 0.0120 | -0.0224 | 0.0286 |
| S2 | -6.5209 | -0.0158 | 0.0018 | -0.0009 | 0.0086 |
| S3 | 10.0000 | -0.0359 | 0.0198 | -0.0117 | 0.0308 |
| S4 | 1.8169 | -0.0190 | 0.0201 | -0.0311 | 0.0893 |
| S5 | 0.0000 | -0.0127 | -0.0115 | -0.0136 | 0.0533 |
| S6 | -18.0000 | -0.0071 | -0.0618 | 0.1233 | -0.1714 |

(continued)

| Surface number | K | A4 | A6 | A8 | A10 |
|---|---|---|---|---|---|
| S7 | 3.8640 | -0.0251 | -0.0254 | 0.0203 | 0.0115 |
| S8 | -10.2850 | -0.0215 | -0.0020 | 0.0026 | -0.0150 |
| S9 | 2.0000 | -0.0068 | -0.0112 | 0.0029 | 0.0054 |
| S10 | -18.0000 | -0.0018 | -0.0539 | 0.0562 | -0.0354 |
| S11 | -2.1235 | 0.0070 | -0.0524 | 0.0448 | -0.0268 |
| S12 | -7.8596 | -0.0083 | 0.0059 | -0.0059 | 0.0022 |
| S13 | -2.4290 | -0.1016 | 0.0333 | -0.0083 | 0.0015 |
| S14 | -1.4674 | -0.0856 | 0.0271 | -0.0067 | 0.0011 |
| Surface number | A12 | A14 | A16 | A18 | A20 |
| S1 | -0.0226 | 0.0112 | -0.0034 | 0.0006 | 0.0000 |
| S2 | -0.0134 | 0.0106 | -0.0048 | 0.0012 | -0.0001 |
| S3 | -0.0428 | 0.0318 | -0.0136 | 0.0031 | -0.0003 |
| S4 | -0.1406 | 0.1266 | -0.0670 | 0.0194 | -0.0024 |
| S5 | -0.0890 | 0.0864 | -0.0497 | 0.0156 | -0.0020 |
| S6 | 0.1636 | -0.0999 | 0.0370 | -0.0075 | 0.0006 |
| S7 | -0.0364 | 0.0341 | -0.0167 | 0.0042 | -0.0004 |
| S8 | 0.0220 | -0.0165 | 0.0069 | -0.0015 | 0.0001 |
| S9 | -0.0089 | 0.0055 | -0.0017 | 0.0003 | 0.0000 |
| S10 | 0.0137 | -0.0032 | 0.0004 | 0.0000 | 0.0000 |
| S11 | 0.0102 | -0.0024 | 0.0003 | 0.0000 | 0.0000 |
| S12 | -0.0004 | 0.0001 | 0.0000 | 0.0000 | 0.0000 |
| S13 | -0.0002 | 0.0000 | 0.0000 | 0.0000 | 0.0000 |
| S14 | -0.0001 | 0.0000 | 0.0000 | 0.0000 | 0.0000 |

FIG. 2b illustrates the longitudinal spherical aberration curve, the astigmatic field curve, and the distortion curve of the optical system according to the second implementation. As illustrated in FIG. 2b, the optical system of the second implementation can have good imaging quality.

Third implementation

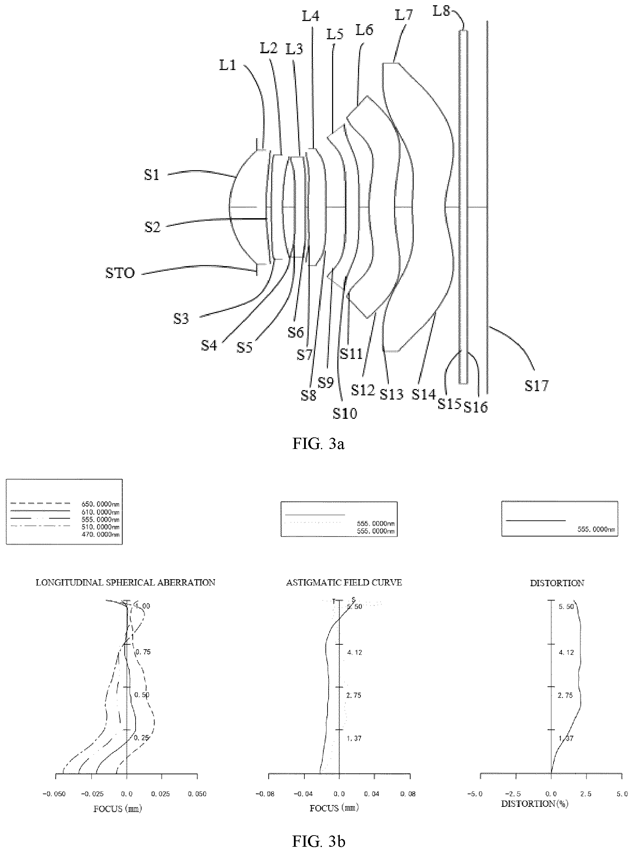

Referring to FIG. 3a and FIG. 3b, the optical system in this implementation includes, in order from an object side to an image side along an optical axis: a first lens L1, a second lens L2, a third lens L3, a fourth lens L4, a fifth lens L5, a sixth lens L6, and a seventh lens L7.

The first lens L1 has a positive refractive power. The object-side surface S1 of the first lens is convex near the optical axis, and the image-side surface S2 of the first lens is concave near the optical axis. The object-side surface S1 of the first lens is concave at the periphery, and the image-side surface S2 of the first lens is convex at the periphery. The second lens L2 has a negative refractive power. The object-side surface S3 of the second lens is convex near the optical axis, and the image-side surface S4 of the second lens is concave near the optical axis. The object-side surface S3 of the second lens is convex at the periphery, and the image-side surface S4 of the second lens is convex at the periphery. The third lens L3 has a negative refractive power. The object-side surface S1 of the third lens is convex near the optical axis, and the image-side surface S2 of the third lens is concave near the optical axis. The object-side surface S5 of the third lens is concave at the periphery, and the image-side surface S6 of the third lens is concave at the periphery. The fourth lens L4 has a positive refractive power. The object-side surface S7 of the fourth lens is convex near the optical axis, and the image-side surface S8 of the fourth lens is concave near the optical axis. The object-side surface S7 of the fourth lens is convex at the periphery, and the image-side surface S8 is a concave surface at the periphery. The fifth lens L5 has a positive refractive power. The object-side surface S9 of the fifth lens is convex near the optical axis, and the image-side surface S10 of the fifth lens is concave near the optical axis. The object-side surface S9 of the fifth lens is convex at the periphery, and the image-side surface S10 is convex at the periphery. The sixth lens L6 has a positive refractive power. The object-side surface S11 of the sixth lens is convex near the optical axis, and the image-side surface S12 of the sixth lens is concave near the optical axis. The object-side surface S11 of the sixth lens is convex at the periphery, and the image-side surface S12 is concave at the periphery. The seventh lens L7 has a negative refractive power. The object-side surface S13 of the seventh lens is convex near the optical axis, and the image-side surface S14 of the seventh lens is concave near the optical axis. The object-side surface S13 of the seventh lens is concave at the periphery, and the image-side surface S14 is convex at the periphery.

The other structures of the optical system of the third implementation are identical with the first implementation, reference can be made to the first implementation.

Table 3a shows characteristics of the optical system in this implementation. Data in Table 3a is obtained based on light of a wavelength of 587 nm. Y radius, thickness, and focal length are all in millimeters (mm).

Table 3a

| Third implementation | | | | | | | | |
|---|---|---|---|---|---|---|---|---|
| $f$= 5.90mm, $FNO$= 1.75, $FOV$=84.94°, $TTL$= 7.00mm | | | | | | | | |
| Surface number | Surface name | Surface type | Y Radius | Thickness | Material | Refractive index | Abbe number | Effective focal length |
| OBJ | Object-side surface | Spherical | Infinity | Infinity | | | | |
| STO | Stop | Spherical | Infinity | -0.7389 | | | | |
| S1 | First lens | Aspherical | 2.2604 | 0.9956 | Plastic | 1.54 | 56.11 | 5.70 |
| S2 | | Aspherical | 7.0529 | 0.1353 | | | | |
| S3 | Second lens | Aspherical | 13.6928 | 0.3157 | Plastic | 1.67 | 19.24 | -20.83 |
| S4 | | Aspherical | 6.8543 | 0.3212 | | | | |
| S5 | Third lens | Aspherical | 64.8948 | 0.2900 | Plastic | 1.67 | 19.24 | -42.34 |
| S6 | | Aspherical | 19.7301 | 0.0769 | | | | |
| S7 | Fourth lens | Aspherical | 8.6064 | 0.4800 | Plastic | 1.52 | 56.74 | 19.20 |
| S8 | | Aspherical | 64.2953 | 0.5334 | | | | |
| S9 | Fifth lens | Aspherical | 250.0000 | 0.3644 | Plastic | 1.59 | 28.32 | 2257.96 |
| S10 | | Aspherical | 307.8892 | 0.2771 | | | | |
| S11 | Sixth lens | Aspherical | 5.0757 | 0.7000 | Plastic | 1.59 | 28.32 | 39.90 |
| S12 | | Aspherical | 6.1476 | 0.4715 | | | | |
| S13 | Seventh lens | Aspherical | 4.9301 | 0.8960 | Plastic | 1.54 | 55.75 | -8.80 |
| S14 | | Aspherical | 2.2563 | 0.3874 | | | | |
| S15 | Infrared filter | Spherical | Infinity | 0.2100 | Glass | | | |
| S16 | | Spherical | Infinity | 0.5456 | | | | |
| S17 | Imaging surface | Spherical | Infinity | 0.0000 | | | | |
| Note: The reference wavelength=587nm. | | | | | | | | |

Each parameter in Table 3a represents the same meaning as that in the first implementation.

Table 3b shows higher-order coefficients that can be used for each aspherical lens surface in the third implementation, where the surface profile of each aspherical lens surface can be defined by the formula given in the first implementation.

Table 3b

| Surface number | K | A4 | A6 | A8 | A10 |
|---|---|---|---|---|---|
| S1 | -0.4912 | 0.0033 | 0.0094 | -0.0164 | 0.0199 |
| S2 | -7.1839 | -0.0187 | 0.0061 | -0.0071 | 0.0153 |
| S3 | 7.8178 | -0.0344 | 0.0202 | -0.0117 | 0.0223 |
| S4 | 2.2704 | -0.0178 | 0.0229 | -0.0335 | 0.0808 |
| S5 | 0.0000 | -0.0315 | 0.0276 | -0.0713 | 0.1178 |
| S6 | -14.0833 | -0.0494 | 0.0285 | -0.0085 | -0.0257 |
| S7 | -4.4771 | -0.0591 | 0.0431 | -0.0595 | 0.0757 |
| S8 | -0.2850 | -0.0252 | 0.0031 | -0.0056 | -0.0017 |
| S9 | -18.0000 | -0.0130 | 0.0002 | -0.0161 | 0.0257 |
| S10 | -8.0000 | -0.0079 | -0.0339 | 0.0319 | -0.0177 |
| S11 | -2.3210 | 0.0068 | -0.0365 | 0.0259 | -0.0141 |
| S12 | -6.2843 | -0.0047 | 0.0032 | -0.0043 | 0.0015 |
| S13 | -2.2037 | -0.1037 | 0.0318 | -0.0073 | 0.0012 |
| S14 | -1.4424 | -0.0905 | 0.0285 | -0.0069 | 0.0011 |
| Surface number | A12 | A14 | A16 | A18 | A20 |
| S1 | -0.0148 | 0.0069 | -0.0019 | 0.0003 | 0.0000 |
| S2 | -0.0182 | 0.0125 | -0.0051 | 0.0011 | -0.0001 |
| S3 | -0.0281 | 0.0198 | -0.0081 | 0.0018 | -0.0002 |
| S4 | -0.1214 | 0.1075 | -0.0562 | 0.0161 | -0.0020 |
| S5 | -0.1381 | 0.1082 | -0.0540 | 0.0154 | -0.0019 |
| S6 | 0.0452 | -0.0355 | 0.0149 | -0.0032 | 0.0003 |
| S7 | -0.0715 | 0.0453 | -0.0182 | 0.0041 | -0.0004 |
| S8 | 0.0085 | -0.0080 | 0.0037 | -0.0009 | 0.0001 |
| S9 | -0.0217 | 0.0104 | -0.0028 | 0.0004 | 0.0000 |
| S10 | 0.0059 | -0.0011 | 0.0001 | 0.0000 | 0.0000 |
| S11 | 0.0049 | -0.0011 | 0.0001 | 0.0000 | 0.0000 |
| S12 | -0.0003 | 0.0000 | 0.0000 | 0.0000 | 0.0000 |
| S13 | -0.0001 | 0.0000 | 0.0000 | 0.0000 | 0.0000 |
| S14 | -0.0001 | 0.0000 | 0.0000 | 0.0000 | 0.0000 |

FIG. 3b illustrates the longitudinal spherical aberration curve, the astigmatic field curve, and the distortion curve of the optical system according to the third implementation. As illustrated in FIG. 3b, the optical system of the third implementation can have good imaging quality.

Fourth implementation

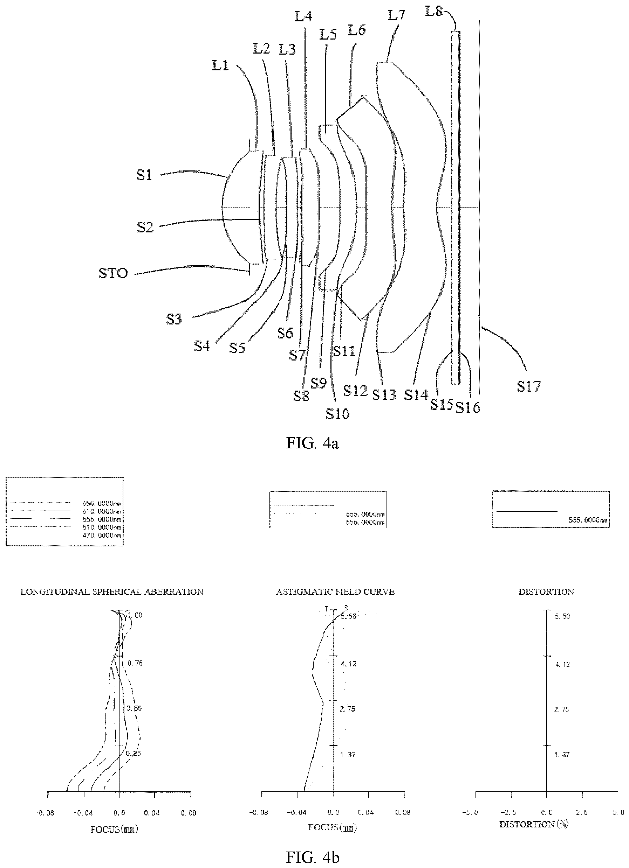

Referring to FIG. 4a and FIG. 4b, the optical system in this implementation includes, in order from an object side to an image side along an optical axis: a first lens L1, a second lens L2, a third lens L3, a fourth lens L4, a fifth lens L5, a sixth lens L6, and a seventh lens L7.

The first lens L1 has a positive refractive power. The object-side surface S1 of the first lens is convex near the optical axis, and the image-side surface S2 of the first lens is concave near the optical axis. The object-side surface S1 of the first lens is concave at the periphery, and the image-side surface S2 of the first lens is convex at the periphery. The second lens L2 has a negative refractive power. The object-side surface S3 of the second lens is convex near the optical axis, and the image-side surface S4 of the second lens is concave near the optical axis. The object-side surface S3 of the second lens is convex at the periphery, and the image-side surface S4 of the second lens is convex at the periphery. The third lens L3 has a negative refractive power. The object-side surface S1 of the third lens is convex near the optical axis, and the image-side surface S2 of the third lens is concave near the optical axis. The object-side surface S5 of the third lens is concave at the periphery, and the image-side surface S6 of the third lens is concave at the periphery. The fourth lens L4 has a positive refractive power. The object-side surface S7 of the fourth lens is convex near the optical axis, and the image-side surface S8 of the fourth lens is concave near the optical axis. The object-side surface S7 of the fourth lens is convex at the periphery, and the image-side surface S8 is a concave surface at the periphery. The fifth lens L5 has a positive refractive power. The object-side surface S9 of the fifth lens is convex near the optical axis, and the image-side surface S10 of the fifth lens is concave near the optical axis. The object-side surface S9 of the fifth lens is concave at the periphery, and the image-side surface S10 is convex at the periphery. The sixth lens L6 has a negative refractive power. The object-side surface S11 of the sixth lens is concave near the optical axis, and the image-side surface S12 of the sixth lens is concave near the optical axis. The object-side surface S11 of the sixth lens is convex at the periphery, and the image-side surface S12 is concave at the periphery. The seventh lens L7 has a negative refractive power. The object-side surface S13 of the seventh lens is convex near the optical axis, and the image-side surface S14 of the seventh lens is concave near the optical axis. The object-side surface S13 of the seventh lens is concave at the periphery, and the image-side surface S14 is convex at the periphery.

The other structures of the optical system of the fourth implementation are identical with the first implementation, reference can be made to the first implementation.

Table 4a shows characteristics of the optical system in this implementation. Data in Table 4a is obtained based on light of a wavelength of 587 nm. Y radius, thickness, and focal length are all in millimeters (mm).

Table 4a

| Fourth implementation | | | | | | | | |
|---|---|---|---|---|---|---|---|---|
| *f*= 5.88mm, *FNO*= 1.75, *FOV*=84.93°, *TTL*= 7.00mm | | | | | | | | |
| Surface number | Surface name | Surface type | Y Radius | Thickness | Material | Refractive index | Abbe number | Effective focal length |
| OBJ | Object-side surface | Spherical | Infinity | Infinity | | | | |
| STO | Stop | Spherical | Infinity | -0.7364 | | | | |
| S1 | First lens | Aspherical | 2.2527 | 0.9920 | Plastic | 1.54 | 56.11 | 5.74 |
| S2 | | Aspherical | 6.8366 | 0.1352 | | | | |
| S3 | Second lens | Aspherical | 13.9790 | 0.3220 | Plastic | 1.67 | 19.24 | -23.29 |
| S4 | | Aspherical | 7.3123 | 0.3012 | | | | |
| S5 | Third lens | Aspherical | 47.5774 | 0.2900 | Plastic | 1.67 | 19.24 | -46.38 |
| S6 | | Aspherical | 18.7734 | 0.1066 | | | | |
| S7 | Fourth lens | Aspherical | 7.3168 | 0.4800 | Plastic | 1.52 | 56.74 | 18.96 |
| S8 | | Aspherical | 28.3537 | 0.5684 | | | | |
| S9 | Fifth lens | Aspherical | -26.9211 | 0.4526 | Plastic | 1.59 | 28.32 | 13.92 |
| S10 | | Aspherical | -6.3117 | 0.2686 | | | | |
| S11 | Sixth lens | Aspherical | -99.9367 | 0.7000 | Plastic | 1.59 | 28.32 | -19.18 |
| S12 | | Aspherical | 12.7317 | 0.3131 | | | | |
| S13 | Seventh lens | Aspherical | 4.9077 | 0.9094 | Plastic | 1.54 | 55.75 | -8.42 |
| S14 | | Aspherical | 2.1976 | 0.4052 | | | | |

(continued)

| Fourth implementation | | | | | | | | |
|---|---|---|---|---|---|---|---|---|
| f= 5.88mm, FNO= 1.75, FOV=84.93°, TTL= 7.00mm | | | | | | | | |
| Surface number | Surface name | Surface type | Y Radius | Thickness | Material | Refractive index | Abbe number | Effective focal length |
| S15 | Infrared filter | Spherical | Infinity | 0.2100 | Glass | | | |
| S16 | | Spherical | Infinity | 0.5456 | | | | |
| S17 | Imaging surface | Spherical | Infinity | 0.0000 | | | | |
| Note: The reference wavelength=587nm. | | | | | | | | |

Each parameter in Table 4a represents the same meaning as that in the first implementation.

Table 4b shows higher-order coefficients that can be used for each aspherical lens surface in the fourth implementation, where the surface profile of each aspherical lens surface can be defined by the formula given in the first implementation.

Table 4b

| Surface number | K | A4 | A6 | A8 | A10 |
|---|---|---|---|---|---|
| S1 | -0.4893 | 0.0019 | 0.0150 | -0.0281 | 0.0346 |
| S2 | -8.0854 | -0.0170 | 0.0046 | -0.0089 | 0.0206 |
| S3 | 5.8805 | -0.0323 | 0.0194 | -0.0209 | 0.0426 |
| S4 | 3.7165 | -0.0151 | 0.0186 | -0.0305 | 0.0811 |
| S5 | 0.0000 | -0.0325 | 0.0380 | -0.0801 | 0.0972 |
| S6 | -12.5796 | -0.0533 | 0.0488 | -0.0351 | -0.0167 |
| S7 | -5.6570 | -0.0631 | 0.0453 | -0.0398 | 0.0257 |
| S8 | -10.2850 | -0.0332 | 0.0137 | -0.0236 | 0.0241 |
| S9 | 2.0000 | -0.0362 | 0.0495 | -0.0793 | 0.0774 |
| S10 | -18.0000 | -0.0222 | 0.0064 | -0.0110 | 0.0070 |
| S11 | -12.8810 | 0.0317 | -0.0470 | 0.0282 | -0.0163 |
| S12 | 1.6104 | 0.0154 | -0.0090 | -0.0004 | 0.0008 |
| S13 | -2.3616 | -0.0953 | 0.0320 | -0.0080 | 0.0014 |
| S14 | -1.4139 | -0.0918 | 0.0298 | -0.0075 | 0.0013 |
| Surface number | A12 | A14 | A16 | A18 | A20 |
| S1 | -0.0262 | 0.0124 | -0.0036 | 0.0006 | 0.0000 |
| S2 | -0.0246 | 0.0169 | -0.0069 | 0.0015 | -0.0001 |
| S3 | -0.0508 | 0.0351 | -0.0142 | 0.0031 | -0.0003 |
| S4 | -0.1243 | 0.1105 | -0.0577 | 0.0164 | -0.0020 |
| S5 | -0.0838 | 0.0514 | -0.0223 | 0.0062 | -0.0008 |
| S6 | 0.0563 | -0.0509 | 0.0234 | -0.0055 | 0.0005 |
| S7 | -0.0164 | 0.0108 | -0.0055 | 0.0016 | -0.0002 |
| S8 | -0.0164 | 0.0067 | -0.0015 | 0.0001 | 0.0000 |
| S9 | -0.0494 | 0.0202 | -0.0051 | 0.0007 | 0.0000 |

(continued)

| Surface number | K | A4 | A6 | A8 | A10 |
|---|---|---|---|---|---|
| S10 | -0.0022 | 0.0005 | -0.0001 | 0.0000 | 0.0000 |
| S11 | 0.0068 | -0.0018 | 0.0003 | 0.0000 | 0.0000 |
| S12 | -0.0002 | 0.0000 | 0.0000 | 0.0000 | 0.0000 |
| S13 | -0.0002 | 0.0000 | 0.0000 | 0.0000 | 0.0000 |
| S14 | -0.0001 | 0.0000 | 0.0000 | 0.0000 | 0.0000 |

FIG. 4b illustrates the longitudinal spherical aberration curve, the astigmatic field curve, and the distortion curve of the optical system according to the fourth implementation. As illustrated in FIG. 4b, the optical system of the fourth implementation can have good imaging quality.

Fifth implementation

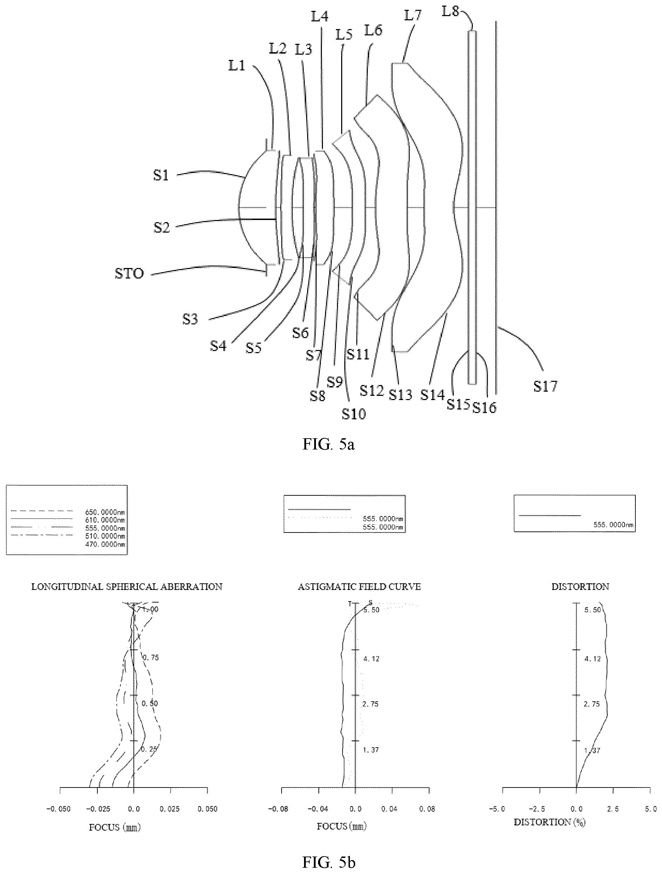

Referring to FIG. 5a and FIG. 5b, the optical system in this implementation includes, in order from an object side to an image side along an optical axis: a first lens L1, a second lens L2, a third lens L3, a fourth lens L4, a fifth lens L5, a sixth lens L6, and a seventh lens L7.

The first lens L1 has a positive refractive power. The object-side surface S1 of the first lens is convex near the optical axis, and the image-side surface S2 of the first lens is concave near the optical axis. The object-side surface S1 of the first lens is concave at the periphery, and the image-side surface S2 of the first lens is convex at the periphery. The second lens L2 has a negative refractive power. The object-side surface S3 of the second lens is convex near the optical axis, and the image-side surface S4 of the second lens is concave near the optical axis. The object-side surface S3 of the second lens is convex at the periphery, and the image-side surface S4 of the second lens is convex at the periphery. The third lens L3 has a negative refractive power. The object-side surface S1 of the third lens is convex near the optical axis, and the image-side surface S2 of the third lens is concave near the optical axis. The object-side surface S5 of the third lens is concave at the periphery, and the image-side surface S6 of the third lens is concave at the periphery. The fourth lens L4 has a positive refractive power. The object-side surface S7 of the fourth lens is convex near the optical axis, and the image-side surface S8 of the fourth lens is convex near the optical axis. The object-side surface S7 of the fourth lens is convex at the periphery, and the image-side surface S8 is a concave surface at the periphery. The fifth lens L5 has a negative refractive power. The object-side surface S9 of the fifth lens is concave near the optical axis, and the image-side surface S10 of the fifth lens is convex near the optical axis. The object-side surface S9 of the fifth lens is convex at the periphery, and the image-side surface S10 is concave at the periphery. The sixth lens L6 has a positive refractive power. The object-side surface S11 of the sixth lens is convex near the optical axis, and the image-side surface S12 of the sixth lens is convex near the optical axis. The object-side surface S11 of the sixth lens is convex at the periphery, and the image-side surface S12 is concave at the periphery. The seventh lens L7 has a negative refractive power. The object-side surface S13 of the seventh lens is convex near the optical axis, and the image-side surface S14 of the seventh lens is concave near the optical axis. The object-side surface S13 of the seventh lens is concave at the periphery, and the image-side surface S14 is convex at the periphery.

The other structures of the optical system of the fifth implementation are identical with the first implementation, reference can be made to the first implementation.

Table 5a shows characteristics of the optical system in this implementation. Data in Table 5a is obtained based on light of a wavelength of 587 nm. Y radius, thickness, and focal length are all in millimeters (mm).

Table 5a

| Fifth implementation | | | | | | | | |
|---|---|---|---|---|---|---|---|---|
| $f$= 5.90 mm, $FNO$= 1.75, $FOV$=84.97°, $TTL$= 7.00mm | | | | | | | | |
| Surface number | Surface name | Surface type | Y Radius | Thickness | Material | Refractive index | Abbe number | Effective focal length |
| OBJ | Object-side surface | Spherical | Infinity | Infinity | | | | |
| STO | Stop | Spherical | Infinity | -0.7471 | | | | |
| S1 | First lens | Aspherical | 2.2464 | 1.0091 | Plastic | 1.54 | 56.11 | 5.54 |
| S2 | | Aspherical | 7.4300 | 0.1410 | | | | |
| S3 | Second lens | Aspherical | 13.9437 | 0.3035 | Plastic | 1.67 | 19.24 | -19.13 |
| S4 | | Aspherical | 6.6261 | 0.3047 | | | | |
| S5 | Third lens | Aspherical | 80.5962 | 0.2900 | Plastic | 1.67 | 19.24 | -26.65 |
| S6 | | Aspherical | 14.6208 | 0.0431 | | | | |
| S7 | Fourth lens | Aspherical | 6.8944 | 0.4915 | Plastic | 1.52 | 56.74 | 13.16 |
| S8 | | Aspherical | -450.4000 | 0.5195 | | | | |
| S9 | Fifth lens | Aspherical | -17.6839 | 0.3519 | Plastic | 1.59 | 28.32 | -38.72 |
| S10 | | Aspherical | -80.0072 | 0.2671 | | | | |
| S11 | Sixth lens | Aspherical | 7.6040 | 0.8573 | Plastic | 1.59 | 28.32 | 12.06 |
| S12 | | Aspherical | -100.0238 | 0.4661 | | | | |
| S13 | Seventh lens | Aspherical | 7.3849 | 0.7967 | Plastic | 1.54 | 55.75 | -5.95 |
| S14 | | Aspherical | 2.1405 | 0.4031 | | | | |
| S15 | Infrared filter | Spherical | Infinity | 0.2100 | Glass | | | |
| S16 | | Spherical | Infinity | 0.5456 | | | | |
| S17 | Imaging surface | Spherical | Infinity | 0.0000 | | | | |
| Note: The reference wavelength=587nm. | | | | | | | | |

Each parameter in Table 5a represents the same meaning as that in the first implementation.

Table 5b shows higher-order coefficients that can be used for each aspherical lens surface in the fifth implementation, where the surface profile of each aspherical lens surface can be defined by the formula given in the first implementation.

Table 5b

| Surface number | K | A4 | A6 | A8 | A10 |
|---|---|---|---|---|---|
| S1 | -0.4870 | 0.0036 | 0.0090 | -0.0148 | 0.0168 |
| S2 | -6.9169 | -0.0168 | 0.0060 | -0.0091 | 0.0188 |
| S3 | 8.6198 | -0.0334 | 0.0193 | -0.0130 | 0.0264 |
| S4 | 1.0318 | -0.0175 | 0.0200 | -0.0292 | 0.0746 |
| S5 | 0.0000 | -0.0250 | 0.0110 | -0.0301 | 0.0458 |
| S6 | -18.0035 | -0.0624 | 0.0352 | -0.0016 | -0.0558 |
| S7 | -11.9849 | -0.0740 | 0.0568 | -0.0630 | 0.0556 |
| S8 | -10.2850 | -0.0179 | -0.0088 | 0.0170 | -0.0335 |
| S9 | 2.0000 | -0.0175 | -0.0455 | 0.0590 | -0.0423 |
| S10 | 2.0000 | 0.0045 | -0.0941 | 0.0975 | -0.0614 |
| S11 | 0.4460 | 0.0487 | -0.0770 | 0.0516 | -0.0256 |
| S12 | -17.7960 | 0.0448 | -0.0203 | 0.0033 | -0.0002 |
| S13 | -0.8143 | -0.0851 | 0.0245 | -0.0058 | 0.0011 |
| S14 | -1.4699 | -0.0965 | 0.0323 | -0.0083 | 0.0014 |
| Surface number | A12 | A14 | A16 | A18 | A20 |
| S1 | -0.0116 | 0.0050 | -0.0013 | 0.0002 | 0.0000 |
| S2 | -0.0215 | 0.0143 | -0.0056 | 0.0012 | -0.0001 |
| S3 | -0.0328 | 0.0227 | -0.0091 | 0.0020 | -0.0002 |
| S4 | -0.1132 | 0.1005 | -0.0527 | 0.0152 | -0.0018 |
| S5 | -0.0548 | 0.0473 | -0.0270 | 0.0088 | -0.0012 |
| S6 | 0.0934 | -0.0750 | 0.0328 | -0.0075 | 0.0007 |
| S7 | -0.0321 | 0.0123 | -0.0035 | 0.0007 | -0.0001 |
| S8 | 0.0373 | -0.0246 | 0.0096 | -0.0021 | 0.0002 |
| S9 | 0.0154 | -0.0016 | -0.0006 | 0.0002 | 0.0000 |
| S10 | 0.0247 | -0.0062 | 0.0009 | -0.0001 | 0.0000 |
| S11 | 0.0086 | -0.0019 | 0.0002 | 0.0000 | 0.0000 |
| S12 | 0.0000 | 0.0000 | 0.0000 | 0.0000 | 0.0000 |
| S13 | -0.0001 | 0.0000 | 0.0000 | 0.0000 | 0.0000 |
| S14 | -0.0002 | 0.0000 | 0.0000 | 0.0000 | 0.0000 |

FIG. 5b illustrates the longitudinal spherical aberration curve, the astigmatic field curve, and the distortion curve of the optical system according to the fifth implementation. As illustrated in FIG. 5b, the optical system of the fifth implementation can have good imaging quality.

Sixth implementation

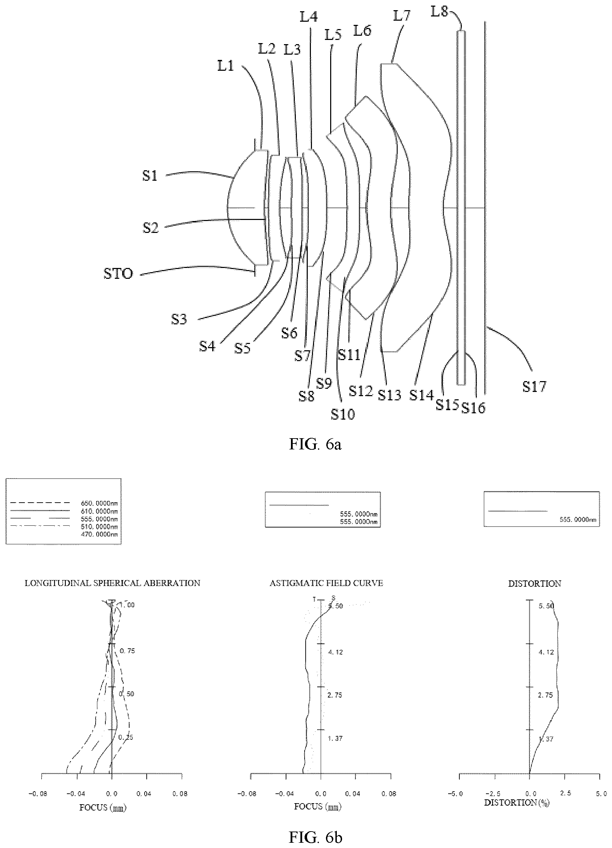

Referring to FIG. 6a and FIG. 6b, the optical system in this implementation includes, in order from an object side to an image side along an optical axis: a first lens L1, a second lens L2, a third lens L3, a fourth lens L4, a fifth lens L5, a sixth lens L6, and a seventh lens L7.

The first lens L1 has a positive refractive power. The object-side surface S1 of the first lens is convex near the optical axis, and the image-side surface S2 of the first lens is concave near the optical axis. The object-side surface S1 of the first lens is concave at the periphery, and the image-side surface S2 of the first lens is concave at the periphery. The second lens L2 has a negative refractive power. The object-side surface S3 of the second lens is convex near the optical axis, and the image-side surface S4 of the second lens is concave near the optical axis. The object-side surface S3 of the second lens is convex at the periphery, and the image-side surface S4 of the second lens is convex at the periphery. The third lens L3 has a positive refractive power. The object-side surface S1 of the third lens is convex near the optical axis, and the image-side surface S2 of the third lens is concave near the optical axis. The object-side surface S5 of the third lens is concave at the periphery, and the image-side surface S6 of the third lens is concave at the periphery. The fourth lens L4 has a positive refractive power. The object-side surface S7 of the fourth lens is concave near the optical axis, and the image-side surface S8 of the fourth lens is convex near the optical axis. The object-side surface S7 of the fourth lens is convex at the periphery, and the image-side surface S8 is a concave surface at the periphery. The fifth lens L5 has a negative refractive power. The object-side surface S9 of the fifth lens is concave near the optical axis, and the image-side surface S10 of the fifth lens is convex near the optical axis. The object-side surface S9 of the fifth lens is convex at the periphery, and the image-side surface S10 is convex at the periphery. The sixth lens L6 has a positive refractive power. The object-side surface S11 of the sixth lens is convex near the optical axis, and the image-side surface S12 of the sixth lens is concave near the optical axis. The object-side surface S11 of the sixth lens is convex at the periphery, and the image-side surface S12 is concave at the periphery. The seventh lens L7 has a negative refractive power. The object-side surface S13 of the seventh lens is convex near the optical axis, and the image-side surface S14 of the seventh lens is concave near the optical axis. The object-side surface S13 of the seventh lens is concave at the periphery, and the image-side surface S14 is convex at the periphery.

The other structures of the optical system of the sixth implementation are identical with the first implementation, reference can be made to the first implementation.

Table 6a shows characteristics of the optical system in this implementation. Data in Table 6a is obtained based on light of a wavelength of 587 nm. Y radius, thickness, and focal length are all in millimeters (mm).

Table 6a

| Sixth implementation | | | | | | | | |
|---|---|---|---|---|---|---|---|---|
| *f*= 5.90mm, *FNO*= 1.75, *FOV*=84.90°, *TTL*= 7.00mm | | | | | | | | |
| Surface number | Surface name | Surface type | Y Radius | Thickness | Material | Refractive index | Abbe number | Effective focal length |
| OBJ | Object-side surface | Spherical | Infinity | Infinity | | | | |
| STO | Stop | Spherical | Infinity | -0.7383 | | | | |
| S1 | First lens | Aspherical | 2.2615 | 1.0041 | Plastic | 1.54 | 56.11 | 5.59 |
| S2 | | Aspherical | 7.4534 | 0.1038 | | | | |
| S3 | Second lens | Aspherical | 13.0069 | 0.3112 | Plastic | 1.67 | 19.24 | -19.14 |
| S4 | | Aspherical | 6.4010 | 0.3151 | | | | |
| S5 | Third lens | Aspherical | 16.8642 | 0.2900 | Plastic | 1.67 | 19.24 | 422.84 |
| S6 | | Aspherical | 17.8055 | 0.1660 | | | | |
| S7 | Fourth lens | Aspherical | -100.0421 | 0.5079 | Plastic | 1.52 | 56.74 | 26.26 |
| S8 | | Aspherical | -11.9580 | 0.5490 | | | | |
| S9 | Fifth lens | Aspherical | -25.2305 | 0.3500 | Plastic | 1.59 | 28.32 | -94.42 |
| S10 | | Aspherical | -46.5181 | 0.1824 | | | | |
| S11 | Sixth lens | Aspherical | 4.4488 | 0.6568 | Plastic | 1.59 | 28.32 | 61.72 |
| S12 | | Aspherical | 4.7939 | 0.4922 | | | | |

(continued)

| Sixth implementation | | | | | | | | |
|---|---|---|---|---|---|---|---|---|
| f= 5.90mm, FNO= 1.75, FOV=84.90°, TTL= 7.00mm | | | | | | | | |
| Surface number | Surface name | Surface type | Y Radius | Thickness | Material | Refractive index | Abbe number | Effective focal length |
| S13 | Seventh lens | Aspherical | 4.7214 | 0.9234 | Plastic | 1.54 | 55.75 | -9.74 |
| S14 | Seventh lens | Aspherical | 2.3087 | 0.3925 | Plastic | 1.54 | 55.75 | -9.74 |
| S15 | Infrared filter | Spherical | Infinity | 0.2100 | Glass | | | |
| S16 | Infrared filter | Spherical | Infinity | 0.5456 | Glass | | | |
| S17 | Imaging surface | Spherical | Infinity | 0.0000 | | | | |
| Note: The reference wavelength=587nm. | | | | | | | | |

Each parameter in Table 6a represents the same meaning as that in the first implementation.

Table 6b shows higher-order coefficients that can be used for each aspherical lens surface in the sixth implementation, where the surface profile of each aspherical lens surface can be defined by the formula given in the first implementation.

Table 6b

| Surface number | K | A4 | A6 | A8 | A10 |
|---|---|---|---|---|---|
| S1 | -0.4930 | 0.0033 | 0.0084 | -0.0130 | 0.0139 |
| S2 | -8.1952 | -0.0241 | 0.0048 | 0.0073 | -0.0063 |
| S3 | 10.0000 | -0.0365 | 0.0224 | -0.0033 | 0.0062 |
| S4 | 2.9573 | -0.0164 | 0.0274 | -0.0465 | 0.1119 |
| S5 | 0.0000 | -0.0354 | 0.0151 | -0.0474 | 0.0842 |
| S6 | -2.8665 | -0.0267 | -0.0143 | 0.0453 | -0.0889 |
| S7 | 3.8640 | -0.0210 | -0.0067 | 0.0005 | 0.0079 |
| S8 | -7.0454 | -0.0245 | 0.0101 | -0.0209 | 0.0157 |
| S9 | -18.0000 | -0.0111 | 0.0156 | -0.0304 | 0.0300 |
| S10 | 2.0000 | -0.0115 | -0.0138 | 0.0161 | -0.0106 |
| S11 | -2.8207 | -0.0054 | -0.0265 | 0.0208 | -0.0118 |
| S12 | -7.3236 | -0.0066 | 0.0024 | -0.0032 | 0.0011 |
| S13 | -2.4607 | -0.0966 | 0.0291 | -0.0068 | 0.0012 |
| S14 | -1.4448 | -0.0842 | 0.0255 | -0.0060 | 0.0009 |
| Surface number | A12 | A14 | A16 | A18 | A20 |
| S1 | -0.0090 | 0.0035 | -0.0008 | 0.0001 | 0.0000 |
| S2 | 0.0007 | 0.0019 | -0.0014 | 0.0004 | -0.0001 |
| S3 | -0.0142 | 0.0128 | -0.0059 | 0.0014 | -0.0001 |
| S4 | -0.1701 | 0.1520 | -0.0798 | 0.0228 | -0.0028 |
| S5 | -0.1054 | 0.0877 | -0.0461 | 0.0138 | -0.0018 |
| S6 | 0.1021 | -0.0692 | 0.0275 | -0.0058 | 0.0005 |
| S7 | -0.0179 | 0.0190 | -0.0105 | 0.0030 | -0.0003 |

(continued)

| Surface number | K | A4 | A6 | A8 | A10 |
|---|---|---|---|---|---|
| S8 | -0.0052 | -0.0007 | 0.0013 | -0.0004 | 0.0001 |
| S9 | -0.0200 | 0.0083 | -0.0021 | 0.0003 | 0.0000 |
| S10 | 0.0037 | -0.0007 | 0.0001 | 0.0000 | 0.0000 |
| S11 | 0.0041 | -0.0009 | 0.0001 | 0.0000 | 0.0000 |
| S12 | -0.0002 | 0.0000 | 0.0000 | 0.0000 | 0.0000 |
| S13 | -0.0001 | 0.0000 | 0.0000 | 0.0000 | 0.0000 |
| S14 | -0.0001 | 0.0000 | 0.0000 | 0.0000 | 0.0000 |

FIG. 6b illustrates the longitudinal spherical aberration curve, the astigmatic field curve, and the distortion curve of the optical system according to the sixth implementation. As illustrated in FIG. 6b, the optical system of the sixth implementation can have good imaging quality.

Seventh implementation

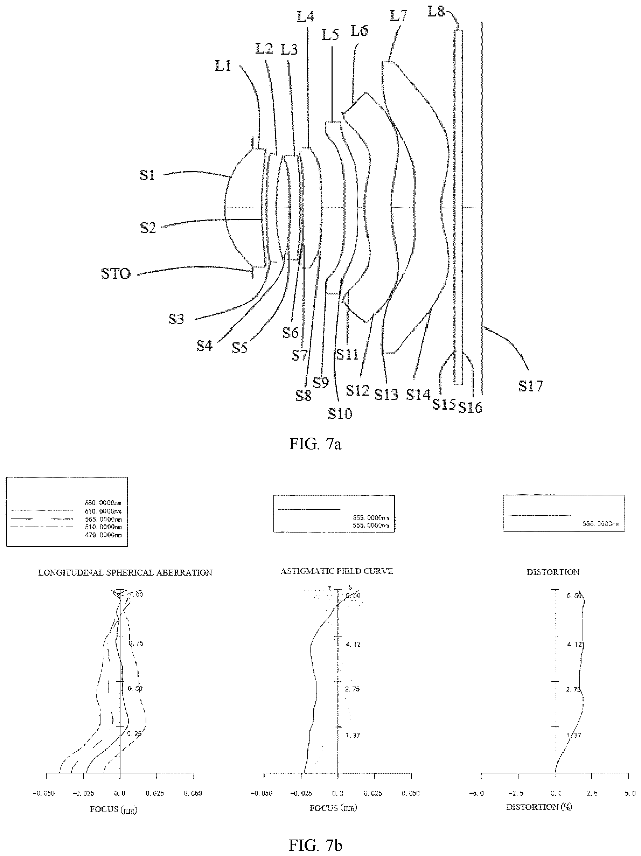

Referring to FIG. 7a and FIG. 7b, the optical system in this implementation includes, in order from an object side to an image side along an optical axis: a first lens L1, a second lens L2, a third lens L3, a fourth lens L4, a fifth lens L5, a sixth lens L6, and a seventh lens L7.

The first lens L1 has a positive refractive power. The object-side surface S1 of the first lens is convex near the optical axis, and the image-side surface S2 of the first lens is concave near the optical axis. The object-side surface S1 of the first lens is convex at the periphery, and the image-side surface S2 of the first lens is concave at the periphery. The second lens L2 has a negative refractive power. The object-side surface S3 of the second lens is convex near the optical axis, and the image-side surface S4 of the second lens is concave near the optical axis. The object-side surface S3 of the second lens is convex at the periphery, and the image-side surface S4 of the second lens is convex at the periphery. The third lens L3 has a negative refractive power. The object-side surface S1 of the third lens is concave near the optical axis, and the image-side surface S2 of the third lens is concave near the optical axis. The object-side surface S5 of the third lens is concave at the periphery, and the image-side surface S6 of the third lens is concave at the periphery. The fourth lens L4 has a positive refractive power. The object-side surface S7 of the fourth lens is convex near the optical axis, and the image-side surface S8 of the fourth lens is concave near the optical axis. The object-side surface S7 of the fourth lens is convex at the periphery, and the image-side surface S8 is a concave surface at the periphery. The fifth lens L5 has a negative refractive power. The object-side surface S9 of the fifth lens is concave near the optical axis, and the image-side surface S10 of the fifth lens is concave near the optical axis. The object-side surface S9 of the fifth lens is concave at the periphery, and the image-side surface S10 is convex at the periphery. The sixth lens L6 has a positive refractive power. The object-side surface S11 of the sixth lens is convex near the optical axis, and the image-side surface S12 of the sixth lens is concave near the optical axis. The object-side surface S11 of the sixth lens is convex at the periphery, and the image-side surface S12 is concave at the periphery. The seventh lens L7 has a negative refractive power. The object-side surface S13 of the seventh lens is convex near the optical axis, and the image-side surface S14 of the seventh lens is concave near the optical axis. The object-side surface S13 of the seventh lens is concave at the periphery, and the image-side surface S14 is convex at the periphery.

The other structures of the optical system of the seventh implementation are identical with the first implementation, reference can be made to the first implementation.

Table 7a shows characteristics of the optical system in this implementation. Data in Table 7a is obtained based on light of a wavelength of 587 nm. Y radius, thickness, and focal length are all in millimeters (mm).

Table 7a

| Seventh implementation | | | | | | | | |
|---|---|---|---|---|---|---|---|---|
| *f*= 5.88mm, *FNO*= 1.69, *FOV*=85.02°, *TTL*= 7.05mm | | | | | | | | |
| Surface number | Surface name | Surface type | Y Radius | Thickness | Material | Refractive index | Abbe number | Effective focal length |
| OBJ | Object-side surface | Spherical | Infinity | Infinity | | | | |
| STO | Stop | Spherical | Infinity | -0.7748 | | | | |
| S1 | First lens | Aspherical | 2.3261 | 1.0151 | Plastic | 1.54 | 56.11 | 5.91 |
| S2 | | Aspherical | 7.1083 | 0.1357 | | | | |
| S3 | Second lens | Aspherical | 10.2099 | 0.2643 | Plastic | 1.67 | 19.24 | -23.39 |
| S4 | | Aspherical | 6.1232 | 0.3730 | | | | |
| S5 | Third lens | Aspherical | -61.0685 | 0.2900 | Plastic | 1.67 | 19.24 | -21.94 |
| S6 | | Aspherical | 19.4491 | 0.0615 | | | | |
| S7 | Fourth lens | Aspherical | 7.1298 | 0.5083 | Plastic | 1.52 | 56.74 | 13.90 |
| S8 | | Aspherical | 1136.6270 | 0.6374 | | | | |
| S9 | Fifth lens | Aspherical | -33.4699 | 0.3577 | Plastic | 1.59 | 28.32 | -50.20 |
| S10 | | Aspherical | 249.1381 | 0.1923 | | | | |
| S11 | Sixth lens | Aspherical | 3.5998 | 0.7382 | Plastic | 1.59 | 28.32 | 14.52 |
| S12 | | Aspherical | 5.7546 | 0.6185 | | | | |
| S13 | Seventh lens | Aspherical | 5.4327 | 0.7308 | Plastic | 1.54 | 55.75 | -7.50 |
| S14 | | Aspherical | 2.1998 | 0.3717 | | | | |
| S15 | Infrared filter | Spherical | Infinity | 0.2100 | Glass | | | |
| S16 | | Spherical | Infinity | 0.5456 | | | | |
| S17 | Imaging surface | Spherical | Infinity | 0.0000 | | | | |
| Note: The reference wavelength=587nm. | | | | | | | | |

Each parameter in Table 7a represents the same meaning as that in the first implementation.

Table 7b shows higher-order coefficients that can be used for each aspherical lens surface in the seventh implementation, where the surface profile of each aspherical lens surface can be defined by the formula given in the first implementation.

Table 7b

| Surface number | K | A4 | A6 | A8 | A10 |
|---|---|---|---|---|---|
| S1 | -0.4776 | 0.0028 | 0.0087 | -0.0139 | 0.0154 |
| S2 | -6.0407 | -0.0214 | 0.0062 | -0.0005 | 0.0029 |
| S3 | -10.0000 | -0.0408 | 0.0232 | -0.0075 | 0.0130 |
| S4 | -0.3807 | -0.0221 | 0.0226 | -0.0221 | 0.0494 |
| S5 | 0.0000 | -0.0315 | 0.0273 | -0.0466 | 0.0444 |
| S6 | -18.0000 | -0.0771 | 0.0708 | -0.0554 | 0.0050 |

(continued)

| Surface number | K | A4 | A6 | A8 | A10 |
|---|---|---|---|---|---|
| S7 | -16.1360 | -0.0874 | 0.0751 | -0.0726 | 0.0421 |
| S8 | -10.2850 | -0.0228 | -0.0048 | 0.0077 | -0.0139 |
| S9 | 2.0000 | -0.0050 | -0.0146 | 0.0127 | -0.0067 |
| S10 | -18.0000 | -0.0237 | -0.0313 | 0.0371 | -0.0228 |
| S11 | -4.0311 | -0.0056 | -0.0297 | 0.0232 | -0.0129 |
| S12 | -5.3966 | 0.0082 | -0.0069 | -0.0001 | 0.0005 |
| S13 | -2.1595 | -0.1036 | 0.0295 | -0.0060 | 0.0009 |
| S14 | -1.3568 | -0.0997 | 0.0313 | -0.0076 | 0.0012 |
| Surface number | A12 | A14 | A16 | A18 | A20 |
| S1 | -0.0104 | 0.0044 | -0.0011 | 0.0002 | 0.0000 |
| S2 | -0.0050 | 0.0038 | -0.0016 | 0.0004 | 0.0000 |
| S3 | -0.0185 | 0.0134 | -0.0054 | 0.0011 | -0.0001 |
| S4 | -0.0718 | 0.0594 | -0.0286 | 0.0075 | -0.0008 |
| S5 | -0.0271 | 0.0105 | -0.0028 | 0.0007 | -0.0001 |
| S6 | 0.0393 | -0.0409 | 0.0197 | -0.0047 | 0.0005 |
| S7 | -0.0064 | -0.0080 | 0.0057 | -0.0015 | 0.0002 |
| S8 | 0.0142 | -0.0086 | 0.0031 | -0.0006 | 0.0001 |
| S9 | 0.0009 | 0.0006 | -0.0003 | 0.0001 | 0.0000 |
| S10 | 0.0083 | -0.0018 | 0.0002 | 0.0000 | 0.0000 |
| S11 | 0.0045 | -0.0009 | 0.0001 | 0.0000 | 0.0000 |
| S12 | -0.0001 | 0.0000 | 0.0000 | 0.0000 | 0.0000 |
| S13 | -0.0001 | 0.0000 | 0.0000 | 0.0000 | 0.0000 |
| S14 | -0.0001 | 0.0000 | 0.0000 | 0.0000 | 0.0000 |

FIG. 7b illustrates the longitudinal spherical aberration curve, the astigmatic field curve, and the distortion curve of the optical system according to the seventh implementation. As illustrated in FIG. 7b, the optical system of the seventh implementation can have good imaging quality.

Table 8 shows values of *TTL/Imgh*, *f/R14*, *FNO*, *TTL/f*, *f1/f2*, *sag1/sag2*, *(R2+R1)/(R2-R1)*, *f1234/f567* of the optical systems according to the first implementation to the seventh implementation.

Table 8

| | *TTL/Imgh* | *f/R14* | *FNO* | *TTL/f* |
|---|---|---|---|---|
| First implementation | 1.27 | 2.63 | 1.75 | 1.18 |
| Second implementation | 1.27 | 2.57 | 1.78 | 1.19 |
| Third implementation | 1.27 | 2.61 | 1.75 | 1.19 |
| Fourth implementation | 1.27 | 2.67 | 1.75 | 1.19 |
| Fifth implementation | 1.27 | 2.76 | 1.75 | 1.19 |
| Sixth implementation | 1.27 | 2.56 | 1.75 | 1.19 |
| Seventh implementation | 1.28 | 2.67 | 1.69 | 1.20 |
| | *f1/f2* | *sag1/sag2* | *(R2+R1)/(R2-R1)* | *f1234/f567* |

(continued)

|  | TTL/Imgh | f/R14 | FNO | TTL/f |
|---|---|---|---|---|
| First implementation | -0.26 | 7.18 | 2.00 | -0.26 |
| Second implementation | -0.31 | 7.61 | 1.87 | -0.31 |
| Third implementation | -0.27 | 7.40 | 1.94 | -0.27 |
| Fourth implementation | -0.25 | 7.31 | 1.98 | -0.25 |
| Fifth implementation | -0.29 | 7.90 | 1.87 | -0.29 |
| Sixth implementation | -0.29 | 8.11 | 1.87 | -0.29 |
| Seventh implementation | -0.25 | 7.15 | 1.97 | -0.25 |

It can be seen from table 8 that each optical systems according to each implementation satisfies the following expressions: $TTL/Imgh<1.32$, $2<f/R14<3.5$, $FNO \leq 2$, $TTL/f<1.35$, $f1/f2> -0.15$, $sag1/sag2 <15$, $(R2+R1)/(R2-R1) <5$, $f1234/f567> -0.5$.

The technical features of the implementations of the present disclosure can be combined. For brief description, not all possible combinations of the various technical features in the implementations of the present disclosure are described herein. However, as long as there is no conflict in the combination of these technical features, such combination should be considered within the scope of the present disclosure.

Only some implementations of the present disclosure are described in detail herein, which should not be understood as a limitation on the scope of the present disclosure. It should be noted that, for those of ordinary skill in the art, without departing from the concept of the present disclosure, modifications and improvements can be made and should be considered within the scope of the present disclosure. Therefore, the scope of the present disclosure should be subject to the appended claims.

**Claims**

1. An optical system comprising, in order from an object side to an image side along an optical axis:

   a first lens with a positive refractive power, wherein the first lens has an object-side surface which is convex near the optical axis and an image-side surface which is concave near the optical axis;
   a second lens with a negative refractive power, wherein the second lens has an object-side surface which is convex near the optical axis and an image-side surface which is concave near the optical axis;
   a third lens with a refractive power;
   a fourth lens with a positive refractive power;
   a fifth lens with a refractive power;
   a sixth lens with a refractive power, wherein the sixth lens has an object-side surface which is concave near the optical axis; and
   a seventh lens with a negative refractive power, wherein the seventh lens has an object-side surface which is convex near the optical axis and an image-side surface which is concave near the optical axis;
   wherein each of the first lens to the seventh lens has an aspherical object-side surface and an aspherical image-side surface, and the optical system satisfies the following expression:

$$TTL/Imgh<1.32;$$

   wherein $TTL$ represents a distance from the object-side surface of the first lens to an imaging surface of the optical system along the optical axis, and $Imgh$ represents half of a length of a diagonal of an effective pixel area of the imaging surface.

2. The optical system of claim 1, wherein the optical system satisfies the following expression:

$$2<f/R14<3.5;$$

wherein *f* represents an effective focal length of the optical system, and *R14* represents a radius of curvature of the image-side surface of the seventh lens at the optical axis.

3. The optical system of claim 1, wherein the optical system satisfies the following expression:

$$FNO \leq 2;$$

wherein *FNO* represents an F-number of the optical system.

4. The optical system of claim 1, wherein the optical system satisfies the following expression:

$$TTL/f < 1.35;$$

wherein *TTL* represents the distance from the object-side surface of the first lens to the imaging surface of the optical system along the optical axis, and *f* represents an effective focal length of the optical system.

5. The optical system of claim 1, wherein the optical system satisfies the following expression:

$$f1/f2 > -0.15;$$

wherein *f1* represents an effective focal length of the first lens, and *f2* represents an effective focal length of the second lens.

6. The optical system of claim 1, wherein the optical system satisfies the following expression:

$$sag1/sag2 < 15;$$

wherein *sag1* represents a saggital depth at an effective aperture of the object-side surface of the first lens, and *sag2* represents a saggital depth at an effective aperture of the image-side surface of the first lens.

7. The optical system of claim 1, wherein the optical system satisfies the following expression:

$$(R2+R1)/(R2-R1) < 5;$$

wherein *R1* represents a radius of curvature of the object-side surface of the first lens, and *R2* represents a radius of curvature of the image-side surface of the first lens.

8. The optical system of claim 1, wherein the optical system satisfies the following expression:

$$f1234/f567 > -0.5;$$

wherein f*1234* represents a combined focal length of the first lens to the fourth lens, and *f567* represents a combined focal length of the fifth lens to the seventh lens.

9. A lens module, comprising:

a lens barrel;
an electronic photosensitive element; and
the optical system of any of claims 1 to 8;
wherein the first lens to the seventh lens of the optical system are disposed in the lens barrel, and the electronic photosensitive element is disposed on the image side of the optical system and configured to convert light passing through the first lens to the seventh lens and incident on the electronic photosensitive element into an electrical signal of an image.

10. An electronic device, comprising:

a housing; and
the lens module of claim 9 received in the housing.

FIG. 1a

FIG. 1b

FIG. 2a

FIG. 2b

LONGITUDINAL SPHERICAL ABERRATION

ASTIGMATIC FIELD CURVE

DISTORTION

FOCUS (mm)

FOCUS (mm)

DISTORTION (%)

FIG. 3a

LONGITUDINAL SPHERICAL ABERRATION

ASTIGMATIC FIELD CURVE

DISTORTION

FOCUS (mm)

FOCUS (mm)

DISTORTION(%)

FIG. 3b

FIG. 4a

FIG. 4b

FIG. 5a

FIG. 5b

FIG. 6a

FIG. 6b

FIG. 7a

FIG. 7b

## INTERNATIONAL SEARCH REPORT

| International application No. |
|---|
| **PCT/CN2020/088513** |

**A. CLASSIFICATION OF SUBJECT MATTER**

G02B 13/00(2006.01)i; G02B 13/18(2006.01)i

According to International Patent Classification (IPC) or to both national classification and IPC

**B. FIELDS SEARCHED**

Minimum documentation searched (classification system followed by classification symbols)

G02B,H04N

Documentation searched other than minimum documentation to the extent that such documents are included in the fields searched

Electronic data base consulted during the international search (name of data base and, where practicable, search terms used)

CNPAT, CNKI, WPI, EPODOC: 欧菲, 镜头, 成像, 光学系统, 光学模组, 透镜组, (一 or '1') 3d 透镜, (二 or '2') 3d 透镜, (四 or '4') 3d 透镜, (七 or '7') 3d 透镜, 对角线 or 像高 or 象高, 焦距, 凸, 凹, lens, first or one or '1' or '1st', second or two or '2' or '2nd', four or fourth or '4' or '4th', seven or seventh or '7' or '7th', positive, nagetive, convex, concave, focal

**C. DOCUMENTS CONSIDERED TO BE RELEVANT**

| Category* | Citation of document, with indication, where appropriate, of the relevant passages | Relevant to claim No. |
|---|---|---|
| X | CN 110908079 A (GENIUS ELECTRONIC OPTICAL (XIAMEN) CO., LTD.) 24 March 2020 (2020-03-24) description paragraphs [0005], [0121]-[0132], [0185]-[0191], figures 6, 34-37 and 46B | 1, 3, 7, 9, 10 |
| A | CN 210376832 U (SAMSUNG ELECTRO-MECHANICS CO., LTD.) 21 April 2020 (2020-04-21) entire document | 1-10 |
| A | CN 210323543 U (NANCHANG OUFEI PREC OPTICAL PRODUCT CO., LTD.) 14 April 2020 (2020-04-14) entire document | 1-10 |
| A | CN 109445073 A (ZHEJIANG SUNNY OPTICS CO., LTD.) 08 March 2019 (2019-03-08) entire document | 1-10 |
| A | CN 110764229 A (GENIUS ELECTRONIC OPTICAL (XIAMEN) CO., LTD.) 07 February 2020 (2020-02-07) entire document | 1-10 |
| A | CN 106154513 A (LARGAN PRECISION CO., LTD.) 23 November 2016 (2016-11-23) entire document | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 January 2021** | **27 January 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/088513** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2020041770 A1 (LARGAN PRECISION CO., LTD.) 06 February 2020 (2020-02-06) entire document | 1-10 |
| A | US 2016139372 A1 (FUJIFILM CORPORATION) 19 May 2016 (2016-05-19) entire document | 1-10 |

Form PCT/ISA/210 (second sheet) (January 2015)

**INTERNATIONAL SEARCH REPORT**
**Information on patent family members**

International application No.

**PCT/CN2020/088513**

| Patent document cited in search report | | | Publication date (day/month/year) | Patent family member(s) | | | Publication date (day/month/year) |
|---|---|---|---|---|---|---|---|
| CN | 110908079 | A | 24 March 2020 | None | | | |
| CN | 210376832 | U | 21 April 2020 | KR | 20200028369 | A | 16 March 2020 |
| | | | | KR | 20190135894 | A | 09 December 2019 |
| | | | | KR | 102087983 | B1 | 11 March 2020 |
| | | | | US | 2019369359 | A1 | 05 December 2019 |
| | | | | CN | 110542987 | A | 05 December 2019 |
| CN | 210323543 | U | 14 April 2020 | None | | | |
| CN | 109445073 | A | 08 March 2019 | WO | 2020134140 | A1 | 02 July 2020 |
| | | | | CN | 209148946 | U | 23 July 2019 |
| CN | 110764229 | A | 07 February 2020 | None | | | |
| CN | 106154513 | A | 23 November 2016 | CN | 109581632 | A | 05 April 2019 |
| | | | | CN | 106154513 | B | 01 March 2019 |
| US | 2020041770 | A1 | 06 February 2020 | US | 2017235110 | A1 | 17 August 2017 |
| | | | | US | 2016306140 | A1 | 20 October 2016 |
| | | | | US | 2019049701 | A1 | 14 February 2019 |
| | | | | TW | I536040 | B | 01 June 2016 |
| | | | | US | 10481368 | B2 | 19 November 2019 |
| | | | | US | 10788650 | B2 | 29 September 2020 |
| | | | | US | 9671591 | B2 | 06 June 2017 |
| | | | | US | 10133033 | B2 | 20 November 2018 |
| | | | | TW | 201638624 | A | 01 November 2016 |
| US | 2016139372 | A1 | 19 May 2016 | US | 9753257 | B2 | 05 September 2017 |
| | | | | JP | 2016095460 | A | 26 May 2016 |

Form PCT/ISA/210 (patent family annex) (January 2015)